# EUROPÄISCHE PATENTSCHRIFT

(11) **EP 1 648 976 B1**
(45) Veröffentlichungstag und Bekanntmachung des Hinweises auf die Patenterteilung: **01.10.2008**
(21) Anmeldenummer: 04740835.6
(22) Anmeldetag: 09.07.2004
(51) Int. Cl.: C09J 5/06, B05C 19/00

(54) **VERFAHREN UND VORRICHTUNG ZUM BESCHICHTEN DER KLEBEFLÄCHEN VON BEFESTIGUNGSELEMENTEN MIT SCHMELZKLEBSTOFF**
METHOD AND DEVICE FOR COATING ADHESIVE SURFACES OF FIXING ELEMENTS WITH A HOT-MELT ADHESIVE
PROCEDE ET DISPOSITIF POUR APPLIQUER UN ADHESIF FUSIBLE SUR DES SURFACES DE COLLAGE D'ELEMENTS DE FIXATION

(30) Priorität: 22.07.2003 DE 10333152
(43) Veröffentlichungstag der Anmeldung: 26.04.2006
(73) Patentinhaber: A. RAYMOND ET CIE, 38000 Grenoble (FR)
(72) Erfinder: HÄNSEL, Mathias, 79595 Rümmingen (DE); BREMONT, Michel, F- 01170 Gex (FR)
(74) Vertreter: Rüttgers, Joachim
(86) Internationale Anmeldenummer: PCT/EP2004/007549
(87) Internationale Veröffentlichungsnummer: WO 2005/014749

(56) Entgegenhaltungen:
- WO-A-98/18612
- DE-A- 4 402 550

## Beschreibung

Die Erfindung bezieht sich auf ein Verfahren zum Beschichten der Klebeflächen von Befestigungselementen mit Schmelzklebstoff sowie auf eine Vorrichtung zur Ausübung dieses Verfahrens.

Hierbei geht es speziell um das Aufbringen von hochreaktiven Schmelzklebstoffen, welche bei Temperaturen bis 50° C verschleißfest und nicht klebend ausgebildet sind und mittels Wärme- oder sonstiger Energiezufuhr zur Herstellung einer dauerhaften Klebeverbindung reaktivierbar sind. Die aufgebrachte Klebstoffschicht muss dabei bis zum Einsatz der Bau- oder Trägerelemente absolut klebefrei bzw. kleberesistent sein und darf erst durch die Reaktivierung des Klebstoffs am Einsatzort die dem Klebstoff innewohnende Haftkraft freisetzen.

Aus der WO 98/18612 ist es zum Beschichten der Klebeflächen von Befestigungselementen bereits bekannt, den fertig gemischten Schmelzklebstoff in fester, vorzugsweise pulverisierter Form auf die Klebefläche aufzubringen und dann unter Ausübung eines Anpressdruckes einer zum Anhaften des Klebstoffs ausreichenden Wärmeeinwirkung auszusetzen. Hierbei kommt es darauf an, dass die volle Klebefläche mit einer gleichmäßig dünnen Schicht belegt und dann mit einem Stempel aufgedrückt wird, dessen Fläche absolut parallel zur Klebefläche ausgerichtet ist. Dieses Beschichtungsverfahren ist mehr zum Beschichten von kleinen Mengen wie in einem Versuchslabor konzipiert und ist lediglich ausgebildet zur Beschichtung von einfach gestalteten, ebenen Klebeflächen wie bei den Bundtellern von Befestigungsbolzen.

Aus DE 4402 550 A1 ist bekannt, zum Aufbringen eines Schmelzklebstoffes auf ein Befestigungselement das Befestigungselement mit einer Klebefläche voran auf die Oberfläche eines Schmelzklebstoffbades abzusenken und wieder anzuheben, wobei die Temperatur so eingerichtet ist, dass der Schmelzklebstoff an der Klebefläche haften bleibt.

Aufgabe der Erfindung ist es, dieses bekannte Anschmelzverfahren auch für Befestigungselemente mit komplizierten Klebeflächen nutzbar zu machen und zu einem vollautomatischen Verfahrensablauf zu entwickeln und die Vorrichtung zur Ausführung dieses Verfahrens so zu gestalten, dass auch Befestigungselemente mit unebenen Klebeflächen gleichmäßig beschichtet werden können.

Diese Aufgabe wird nach der vorliegenden Erfindung durch die im Anspruch 1 angegebenen Verfahrensschritte gelöst.

Das Verfahren gemäß der vorliegenden Erfindung wird durch die folgenden Schritte gelöst:
- das Klebstoffpulver wird zunächst in Aussparungen einer Arbeitsplatte eingefüllt, welche in ihren Konturen der Klebefläche des Befestigungselements entsprechen, und dann in der der Füllhöhe der Aussparungen entsprechenden Stärke glattgestrichen,
- das Befestigungselement wird nach vorheriger Erwärmung in einer Heizstation auf die Temperatur zum Anhaften mit den Klebeflächen über den mit Klebstoffpulver befüllten Aussparungen abgesetzt,
- das Klebstoffpulver wird sodann durch Stößel, deren Querschnitt den Aussparungen und deren Oberseiten der Geometrie des Befestigungselements angepasst sind, von unten gegen die Klebefläche angedrückt.

Eine Vorrichtung zur Ausübung des erfindungsgemäßen Verfahrens ist durch die Merkmale gemäß Anspruch 2 angegeben.

Die Vorrichtung gemäß der Erfindung besteht aus :
- sie besitzt eine Arbeitsplatte mit Aussparungen entsprechend den Konturen der Klebefläche des Befestigungselementes,
- die Grundflächen der Aussparungen werden durch Stößel gebildet, deren Seitenwände in den Aussparungen verschiebbar geführt und deren Oberseiten der Geometrie des Befestigungselements formgerecht angepasst sind,
- seitlich der Aussparungen befindet sich auf der Arbeitsplatte ein horizontal verschiebbarer Behälter zum Einfüllen des Klebstoffpulvers in die Aussparungen, wobei die Seitenkanten des Behälters bündig über die Arbeitsplatte streichen,
- auf der anderen Seite der Aussparungen ist ein ebenfalls horizontal verschiebbarer Schlitten zur Aufnahme des Befestigungselementes angeordnet, welcher mit Durchgangslöcher für die aus der Arbeitsplatte hochfahrenden Stößel versehen ist, die mit ihren Innenwänden den Seitenwänden der Stößel angepasst sind,
- über den Aussparungen ist ein vertikal verschiebbarer Druckstempel mit einer Druckplatte zum Absenken auf das Befestigungselement angeordnet,
- entfernt vom Schlitten ist eine Heizstation installiert, die die Befestigungselemente vor dem Zuführen über die Aussparungen auf die eine Aufwärmtemperatur bringt.

Eine zweckmäßige Weiterbildung der erfindungsgemäßen Vorrichtung ergibt sich aus dem Unteranspruch.

Weitere Merkmale der Erfindung ergeben sich aus der nachfolgenden Beschreibung von Ausführungsbeispielen der Erfindung, welche in den Zeichnungen dargestellt sind. Es zeigen:
- Fig. 1 a)-f): die schematische Darstellung einer Vorrichtung zur Ausübung des erfindungsgemäßen Beschichtungsverfahrens mit den aufeinander folgenden Verfahrensschritten,
- Fig. 2: einen Halter für Regensensoren mit erfindungsgemäß beschichtetem Schmelzklebstoff zum Aufkleben auf eine unebene Windschutzscheibe in perspektivischer Draufsicht,
- Fig. 3: die Unteransicht des gleichen Halters mit Blick auf die Klebeflächen,
- Fig. 4: einen Schnitt durch den Halter gemäß Linie IV - IV in Fig. 3,
- Fig. 5: die schematische Darstellung eines Schnitts durch die Arbeitsplatte, den Schlitten mit einem eingelegten Halter gemäß Fig. 4 und die mit Schmelzklebstoff befüllte Aussparung vor dem Hochfahren der Stößel,
- Fig. 6: den gleichen Schnitt nach dem Hochfahren der Stößel,
- Fig. 7: einen Halter mit Kugelgelenk Zapfen zum Aufkleben auf eine unebene Heckscheibe in perspektivischer Darstellung
- Fig. 8: den gleichen Halter in Unteransicht mit zwei breiten Klebeflächen,
- Fig. 9: eine schematische Darstellung eines Schnitts durch die Arbeitsplatte, den Schlitten mit aufgelegtem Halter und die mit Schmelzklebstoff befüllte Aussparung mit drei nebeneinander verschieblichen Stößel vor dem Hochfahren und
- Fig.10: die gleiche Schnittdarstellung nach dem Hochfahren der Stößel.

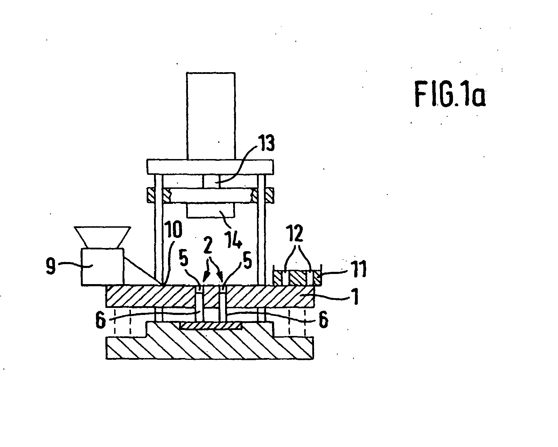

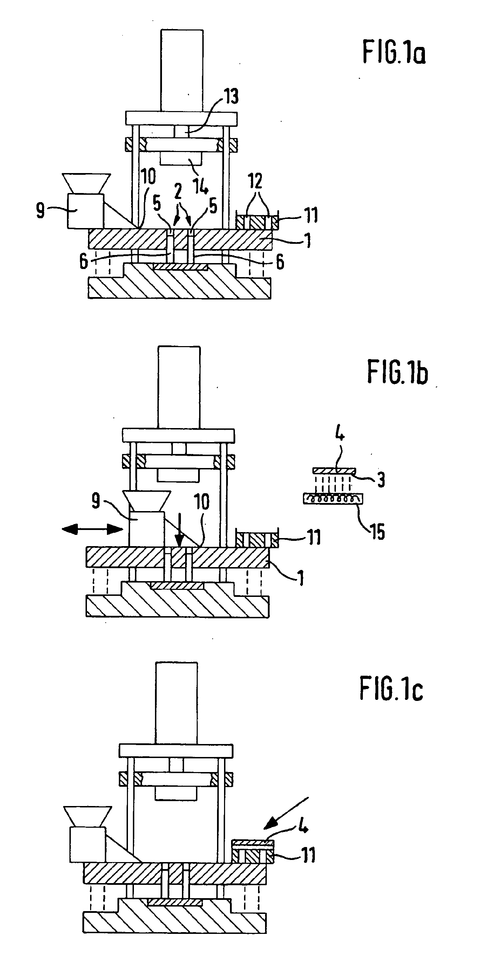

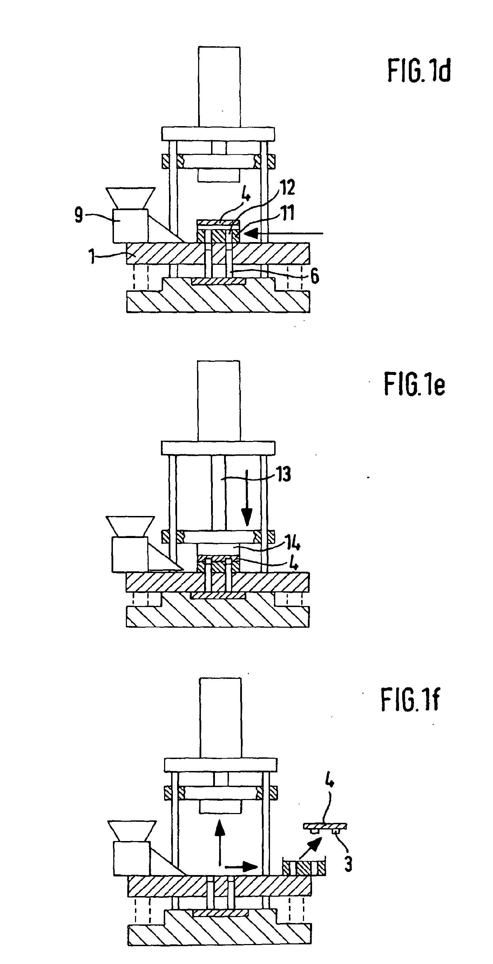

Die in **Fig. 1** dargestellte Vorrichtung dient zur Ausübung des erfindungsgemäßen Verfahrens zum Beschichten der Klebeflächen von Befestigungs- oder Halteelementen mit Schmelzklebstoff. Sie besteht aus einer Arbeitsplatte **1,** welche mit Aussparungen **2** entsprechend den Konturen der Klebefläche **3** des Befestigungselementes **4** versehen ist. Die Grundflächen **5** der Aussparungen **2** sind hierbei durch Stößel **6** gebildet, deren Seitenwände **7** in den Aussparungen **2** verschiebbar geführt sind. Die Oberseite **8** der Stößel **6** ist der Klebefläche **3** des Befestigungselementes **4** formgerecht angepasst; das heißt, dass sie nicht nur den Konturen der Klebeflächen **3** angepasst, sondern auch absolut parallel zur Klebefläche **3** ausgebildet ist.

Auf der Arbeitsplatte 1 ist seitlich neben den Aussparungen **2** ein Behälter **9** zum Einfüllen des Klebstoffpulvers in die Aussparungen **2** angeordnet. Dieser Behälter **9** ist auf der Arbeitsplatte **1** horizontal verschiebbar geführt, wobei die Seitenkanten **10** des Behälters **9** bündig über die Arbeitsplatte **1** streichen.

Auf der anderen Seite der Aussparungen **2** ist ferner ein Schlitten **11** zur Aufnahme des Befestigungs- oder Halteelements **4** angeordnet, welcher ebenfalls auf der Arbeitsplatte **1** in Richtung auf die Aussparungen **2** verschiebbar geführt ist. Die Oberseite dieses Schlittens **11** ist hierbei der Geometrie der Klebeflächen **3** formgerecht angepasst. Dieser Schlitten **11** ist mit Durchgangslöchern **12** für die aus der Arbeitsplatte **1** hochfahrenden Stößel **6** versehen, welche mit ihren Innenwänden den Seitenwänden **7** der Stößel **6** ebenfalls formgerecht angepasst sind.

Über den Aussparungen **2** ist eine über Druckstempel **13** vertikal verschiebbare Druckplatte **14** zum Absenken auf das in den Schlitten **11** eingelegte Befestigungselement **4** angeordnet. Außerdem befindet sich entfernt vom Schlitten 11 eine Heizstation **15,** welche die Befestigungselemente **4** vor dem Zuführen über die Aussparungen **2** auf die gewünschte Anschmelztemperatur aufwärmt.

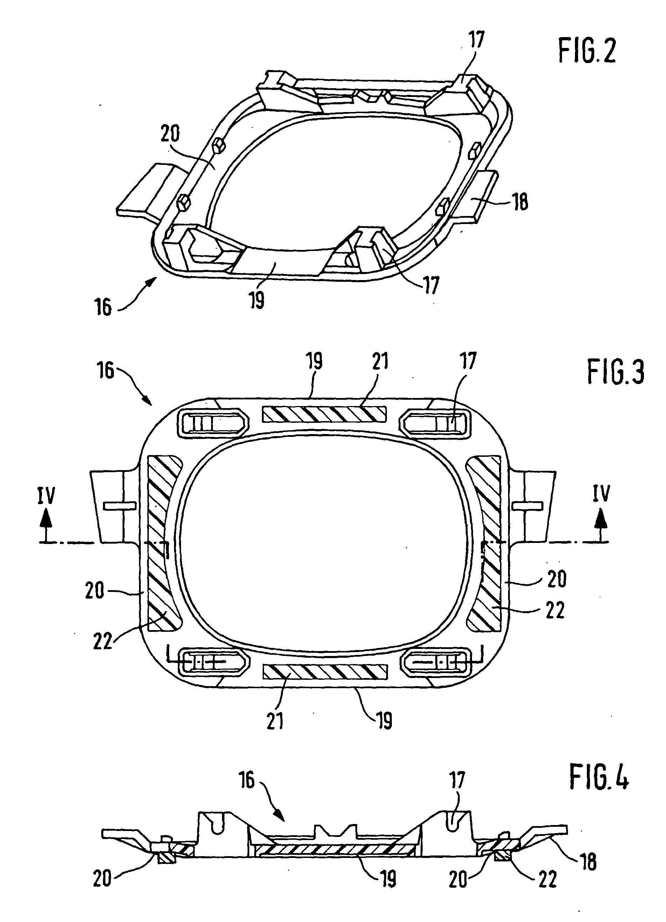

Der in Fig. 1a) bis f) dargestellte Arbeitsablauf lässt sich wie folgt beschreiben:
**Fig. 1a****)** Der Behälter **9** und der Schlitten **11** befinden sich neben der Aussparung **2** auf der Arbeitsplatte **1** in der Ausgangsposition, die Druckplatte **14** in ihrer oberen Warteposition und die Stößel **6** mit ihren Oberseiten **8** unterhalb des Plattenniveaus.
**Fig. 1b****)** Das Befestigungselement **4** befindet sich über der entfernt vom Schlitten 11 installierten Heizstation **15** und wird dort auf die gewünschte Anschmelztemperatur aufgewärmt. Gleichzeitig wird der Behälter **9** mit dem Klebstoffpulver in Pfeilrichtung nach rechts über die Aussparungen **2** gefahren, um das Pulver in diese einzufüllen. Sodann wird der Behälter **9** wieder zurückgefahren, wobei die Seitenkanten **10** des Behälters **9** bündig über die Arbeitsplatte **1** streichen und das Pulver bei der Gelegenheit in der Aussparung **2** auf die gewünschte Füllhöhe abziehen.
**Fig. 1c****)** Das vorgewärmte Befestigungselement **4** wird auf den Schlitten **11,** dessen Oberseite der Geometrie der Klebefläche **3** formgerecht angepasst ist, neben den Aussparungen **2** abgelegt.
**Fig. 1d****)** Der Schlitten **11** wird mit dem eingelegten Befestigungselement **4** über die Aussparungen **2** gefahren und zwar so, dass die Durchgangslöcher **12** mit den Stößeln **6** fluchten.
**Fig. 1e****)** Die Druckplatte **14** wird auf das Befestigungselement **4** abgesenkt. Gleichzeitig werden die Stößel **6** von unten durch die Durchgangslöcher **12** hochgefahren und das in den Aussparungen **2** bereitgestellte Klebstoffpulver gegen die Unterseite des erwärmten Befestigungselements **4** gedrückt.
**Fig. 1f****)** Nachdem das auf der Heizstation vorgewärmte Befestigungselement **4** einer zum Anhaften des Klebstoffs ausreichenden Wärmeeinwirkung ausgesetzt ist, wird die Druckplatte **14** wieder hochgefahren und der Schlitten **11** seitlich zurückgefahren. Sodann kann das beschichtete Befestigungselement **4** von dem Schlitten **11** abgehoben und in einen in der Zeichnung nicht dargestellten Behälter gelagert werden.
Bei dem in den **Fig. 2 bis 4** dargestellten Befestigungselement handelt es sich um einen Halter für Regensensoren zum Aufkleben auf unebene Windschutzscheiben. Dieser Halter besteht aus einem rechteckigen Rahmen **16** mit an den vier Ecken angeformten Befestigungsstellen **17** für die nicht dargestellten Sensoren sowie zwei seitlich gegenüberliegend abstehende Haltelappen **18** zum Erfassen des Rahmens **16.** Auf der Unterseite des Rahmens **16** sind an den Längsseiten **19** und Querseiten **20** längliche Klebeflächen **21** und **22** vorgesehen, welche erfindungsgemäß mit einer dünnen Lage Schmelzklebstoff beschichtet sind.

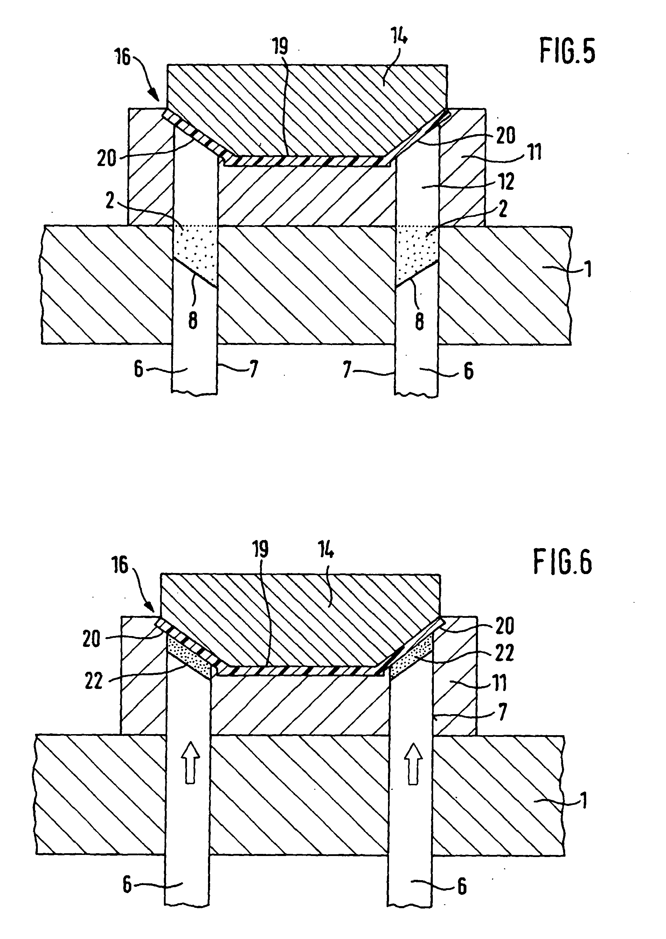

**Fig. 5** zeigt in einer schematischen Darstellung den auf dem Schlitten **11** liegenden Rahmen **16** des in den Fig. 2 bis 4 dargestellten Halters mit horizontalen Längsseiten **19** und gegen diese abgewinkelten Querseiten **20,** welche sich oberhalb der Aussparungen **2** bzw. der Durchgangslöcher **12** befinden und von oben durch die Druckplatte **14** auf den Schlitten **11** niedergedrückt werden. Die Aussparungen **2** sind hierbei von der Oberseite **8** des Stößels **6** vorher aus dem Behälter **9** mit Klebstoffpulver befüllt und dann bis auf das Niveau der Oberfläche der Arbeitsplatte **1** von der Seitenkante **10** des Behälters **9** glattgestrichen worden.
**Fig. 6** zeigt in der gleichen schematischen Darstellung, wie das Klebstoffpulver nach dem Hochfahren der Stößel **6** von diesen planparallel gegen die Klebeflächen **22** der Querseiten **20** angedrückt und verdichtet wird, bis das Pulver durch die Berührung mit dem vorgewärmten Rahmen **16** angeschmolzen ist und durch den von den Stößeln **6** erzeugten Anpressdruck an den Klebeflächen **22** anhaftet.

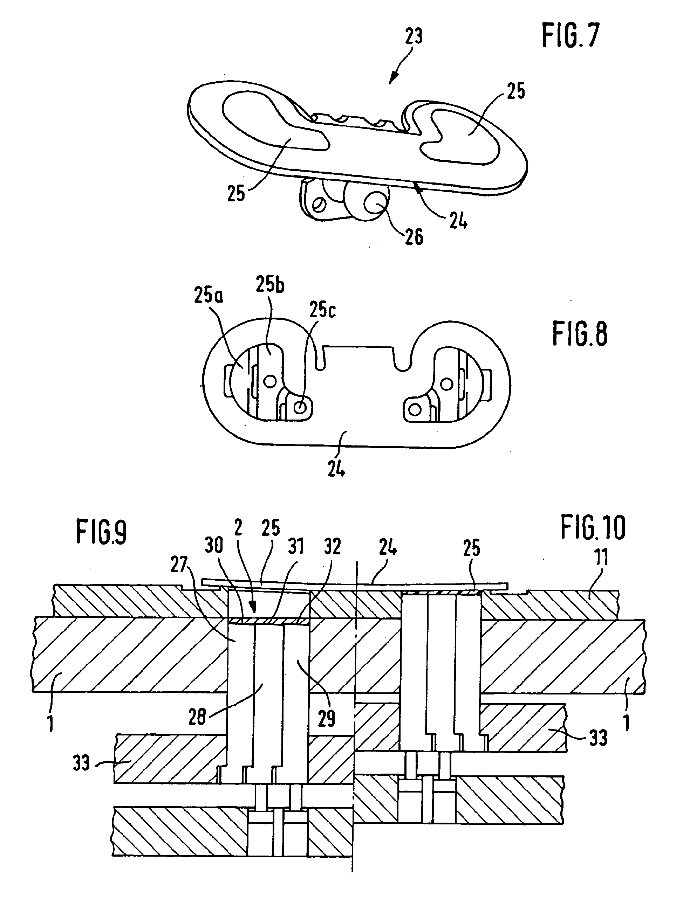

Das in den **Fig. 7 bis 10** dargestellte Ausführungsbeispiel zeigt einen anderen Halter mit einem Kugelzapfen **26** zum Aufkleben auf die unebene Fläche einer Heckscheibe. Der Kugelzapfen **26** dient hierbei zur Lagerung einer sogenannten Gasfeder, welche am Fensterrahmen gegengelagert ist und die Heckscheibe nach dem Hochschwenken abstützt. Dieser Halter besteht aus einer nierenförmig ausgebildeten Grundplatte **23** mit einem an der mittleren Plattenebene **24** angewinkelten Kugelzapfen **26** und an den gegenüberliegenden Enden ausgebildeten, mit Klebstoffpulver beschichteten breiten Klebeflächen **25.** Diese sind gegenüber der mittleren Plattenebene **24** unter einem schwachen Winkel geneigt, welche der im gleichen Winkel geneigten Oberfläche der Heckscheibe angepasst sind.

Wie aus der schematischen Darstellung eines Schnitts durch die Arbeitsplatte **1** in den **Fig. 9 und 10** ersichtlich, werden die Grundflächen **5** der Aussparungen **2** im vorliegenden Ausführungsbeispiel durch jeweils drei in der Arbeitsplatte **1** gegeneinander verschiebliche Stößel **27, 28 und 29** gebildet, die von einer Stößelhalteplatte **33** gehalten sind. Die Oberseiten **30, 31 und 32** jedes Stößels **27, 28 und 29** sind hierbei den jeweils zugehörigen Teilflächen **25a), 25b) und 25c)** der Klebeflächen **25** formgerecht angepasst.

Die Oberseiten **30, 31** und **32** der Stößel **27, 28** und **29** bilden in der in **Fig. 9** gezeigten Ausgangsstellung drei zueinander abgestufte Ebenen, wobei die jeweils oberen Enden der Oberseiten auf der gleichen Höhe liegen. Dadurch wird erreicht, dass die Schichtdicke des eingefüllten Klebstoffpulvers in der Ausgangsstellung über die Breite der Stößel **27, 28** und **29** nur geringfügig schwankt.

**Fig. 10** zeigt die gleiche Schnittdarstellung nach dem Hochfahren der Stößel **27, 28** und **29.** Hierbei wird der Niveauunterschied innerhalb der Stößel Oberseiten **30, 31** oder **32** dadurch ausgeglichen, dass die Stößel gegeneinander leicht verschoben werden, bis sie bei Anlage an den Klebeflächen **25 a), b) und c)** alle in einer Ebene liegen, so dass eine gleich starke Schicht von Klebstoffpulver verdichtet auf die Klebefläche **25** aufgetragen wird.

## Patentansprüche

1. Verfahren zum Beschichten der Klebeflächen von Befestigungselementen mit Schmelzklebstoff, wobei der fertig gemischte Klebstoff in pulverisierter Form auf die Klebefläche aufgebracht und unter Ausübung eines Anpressdruckes einer Wärmeeinwirkung zum Anhaften des Klebstoffs ausgesetzt wird,
**dadurch gekennzeichnet, dass**
• das Klebstoffpulver in Aussparungen einer Arbeitsplatte eingefüllt wird, welche in ihren Konturen der Klebefläche des Befestigungselementes entsprechen, und dann in der der Füllhöhe der Aussparungen entsprechenden Stärke glatt gestrichen wird,
• das Befestigungselement nach vorheriger Erwärmung auf die Temperatur zum Anhaften mit den Klebeflächen über den mit Klebstoffpulver befüllten Aussparungen abgesetzt wird,
• das Klebstoffpulver sodann durch Stößel, deren Querschnitt den Aussparungen und deren jeweiligen Oberseiten der Geometrie der Klebeflächen formgerecht angepasst sind, von unten gegen die Klebeflächen angedrückt wird.

2. Vorrichtung zur Ausübung des Beschichtungsverfahrens nach Anspruch 1, bestehend aus
• einer Arbeitsplatte mit Aussparungen entsprechend den Konturen der Klebefläche des Befestigungselementes, wobei die Grundflächen der Aussparungen durch Stößel gebildet sind, deren Seitenwände in den Aussparungen verschiebbar geführt und deren Oberseiten der Geometrie der Klebeflächen formgerecht angepasst sind,
• einem auf der Arbeitsplatte seitlich angeordneten, horizontal verschiebbaren Behälter zum Einfüllen des Klebstoffpulvers in die Aussparungen, wobei die Seitenkanten des Behälters bündig über die Arbeitsplatte streichen,
• einem auf der anderen Seite der Aussparungen angeordneten, ebenfalls horizontal verschiebbaren Schlitten zur Aufnahme des Befestigungselements, der mit Durchgangslöchern für die aus der Arbeitsplatte hochfahrenden Stößel versehen ist, die mit ihren Innenwänden den Seitenwänden der Stößel angepasst sind,
• einem über den Aussparungen angeordneten, vertikal verschiebbaren Druckstempel mit einer Druckplatte zum Absenken auf das Befestigungselement,
• sowie einer entfernt von dem Schlitten installierten Heizstation zum Erwärmen der Befestigungselemente vor dem Zuführen über die Aussparungen auf eine Aufwärmtemperatur.

3. Vorrichtung nach Anspruch 2, **dadurch gekennzeichnet, dass** die Grundflächen der Aussparung durch jeweils zwei oder mehr gegeneinander verschiebliche Stößel gebildet sind, wobei die Oberseiten jedes Stößels der jeweils zugehörigen Geometrie von Teilflächen der Klebeflächen formgerecht angepasst sind.

## Claims

1. Method for coating adhesive surfaces of fixing elements with hotmelt adhesive, the ready-mixed adhesive being applied in pulverised form to the adhesive surface and, with application of contact pressure, being exposed to the action of heat for adhesion of the adhesive,
**characterized in that**
• the adhesive powder is introduced into recesses of a worktop which correspond in their contours to the adhesive surface of the fixing element and then being scraped smooth with the thickness corresponding to the height of fill of the recesses,
• the fixing element is set down after prior heating to the temperature for adhesion to the adhesive surfaces via the recesses filled with adhesive powder,
• the adhesive powder is then pressed from below against the adhesive surfaces by rams whose cross-section is adapted to the recesses and whose respective tops are adapted in shape to conform to the geometry of the adhesive surfaces.

2. Device for carrying out the coating method according to Claim 1, consisting of
• a worktop having recesses corresponding to the contours of the adhesive surface of the fixing element, the bottom surfaces of the recesses being formed by rams whose side walls are displaceable with guidance in the recesses and whose tops are adapted in shape to conform to the geometry of the adhesive surfaces,
• a horizontally displaceable container arranged laterally on the worktop and intended for introducing the adhesive powder into the recesses, the lateral edges of the container passing flush over the worktop,
• a likewise horizontally displaceable carriage arranged on the other side of the recesses and intended for holding the fixing element which is provided with through-holes for the rams rising out of the worktop, the inner walls of with through-holes are adapted to the side walls of the rams,
• a vertically displaceable plunger arranged above the recesses and having a pressure plate for lowering onto the fixing element,
• and a heating station installed a distance away from the carriage and intended for heating the fixing elements to a heating temperature before being fed over the recesses.

3. Device according to Claim 2, **characterized in that** the bottom surfaces of the recess are formed by in each case two or more rams displaceable relative to one another, the tops of each ram being adapted in shape to conform to the respective associated geometry of partial surfaces of the adhesive surfaces.

## Revendications

1. Procédé d'enduction des faces adhésives d'organes de fixation au moyen d'une substance adhésive fusible, dans lequel la substance adhésive, dans sa composition finale, est appliquée sous la forme d'une poudre sur la surface à enduire puis est exposée, tout en étant soumise à l'action d'une pression d'application, à une source de chaleur destinée à activer l'adhérence de la substance adhésive,
**caractérisé en ce que**
• la substance adhésive en poudre est versée dans des évidements ménagés dans une platine de travail, dont la configuration correspond à la géométrie de la face adhésive de l'organe de fixation, et est ensuite arasée pour obtenir une épaisseur correspondant à la hauteur de remplissage des évidements,
• l'organe de fixation, préalablement porté à la température nécessaire pour réaliser une adhérence, est placé, au niveau de ses faces adhésives, au-dessus des évidements remplis de substance adhésive en poudre,
• la substance adhésive en poudre est ensuite mise en compression, depuis le bas, contre les faces adhésives, au moyen d'un coulisseau, dont la section transversale est géométriquement adaptée à la forme des évidements et dont les faces supérieures respectives sont adaptées à la configuration des faces adhésives à enduire.

2. Dispositif de mise en oeuvre du procédé d'enduction selon la revendication 1, se composant
• d'une platine de travail munie d'évidements dont la configuration correspond à la géométrie de la face adhésive de l'organe de fixation, les fonds des évidements étant en l'occurrence constitués par des coulisseaux, dont les parois latérales ont la possibilité de coulisser à l'intérieur des évidements et dont les faces supérieures respectives sont géométriquement adaptées à la configuration des faces adhésives à enduire,
• d'un récipient pouvant être déplacé dans le plan horizontal, disposé sur le côté de la platine de travail, pour assurer le remplissage des évidements en substance adhésive en poudre, les arêtes latérales du récipient passant en l'occurrence sur la surface de la platine de travail en affleurement de celle-ci,
• une glissière, pouvant également être déplacée dans le plan horizontal, disposée sur l'autre côté des évidements, pour amener l'organe de fixation en position, qui est munie de trous débouchants pour permettre le passage des coulisseaux se déplaçant vers le haut depuis la platine de travail et dont les parois intérieures sont prévues pour épouser la géométrie des parois latérales des coulisseaux,
• d'un piston de mise en compression pouvant se déplacer dans le plan vertical, disposé au-dessus des évidements, muni d'une plaque de pression destinée à être descendue en position sur l'organe de fixation
• ainsi que d'un poste de chauffe installé, à une certaine distance de la glissière, pour porter les organes de fixation à la température requise avant leur amenée en position au-dessus des évidements.

3. Dispositif selon la revendication 2, **caractérisé en ce que** les fonds des évidements sont constitués par deux ou par un plus grand nombre de coulisseaux respectivement déplaçables les uns par rapport aux autres, la configuration des faces supérieures de chaque coulisseau étant en l'occurrence adaptée à la géométrie de portions correspondantes des faces adhésives à enduire.
